# EUROPEAN PATENT SPECIFICATION

(11) **EP 3 322 546 B1**
(45) Date of publication and mention of the grant of the patent: **01.09.2021**
(21) Application number: 16738516.0
(22) Date of filing: 08.07.2016
(51) Int. Cl.: B21D 51/48, B21D 51/50, B32B 7/04, B65D 41/00, B21D 51/46

(54) **COATED METAL CLOSURES AND ITS MANUFACTURING METHOD**
BESCHICHTETE METALLVERSCHLÜSSE
FERMETURES MÉTALLIQUES REVÊTUES

(30) Priority: 13.07.2015 GB 201512217
(43) Date of publication of application: 23.05.2018
(73) Proprietor: Crown Packaging Technology, Inc., Alsip, IL 60803-2599 (US)
(72) Inventor: DUNWOODY, Paul Robert, Wantage Oxfordshire OX12 9BP (GB)
(74) Representative: Lind, Robert
(86) International application number: PCT/GB2016/052055
(87) International publication number: WO 2017/009607

(56) References cited:
- WO-A1-2010/136414
- US-A- 3 633 781
- US-A1- 2009 236 353

## Description

### Technical Field

This invention relates to coated metal closures for a food and beverage containers.

### Background

Many types of metal closure or "lids" are known for food or beverage containers. A common class of closure comprises a generally circular panel region and a downwardly dependant skirt, and have a ring of sealing material applied to the underside of the panel region in order to form a seal onto the rim of a container. Such closures are typically manufactured from sheet metal that has been provided with layers of (typically organic) coatings, and are drawn from a circular blank that has been cut from the coated sheet. The drawing process comprises clamping the blank with pressure between an annular draw die and an annular pressure ring, and pushing it over a circular central block. Annular features such as tamper-evident buttons and channels to accommodate the sealing material are formed at the end of the movement of the drawing operation by tools opposing the central block. Such closures may then have lugs or threads formed on the skirt to engage with the container, and curls to hide the edge of the metal. Two-part easy-open closures may also be manufactured from a single-part metal blank as described in EP2228152A1.

The coatings provided on the side of the sheet metal, and that will become the internal surface of the cap, commonly comprise more than one layer, in which case a base-coat is first applied and cured, then any intermediate coats are applied and cured, before a top-coat is applied and cured. These coatings are designed to prevent undesirable chemical reactions such as corrosion of the metal and contamination of the product. The coatings must withstand the process of drawing the sheet metal to form the skirt and the forming any other features such as threads, curls or lugs, and so must be flexible and must have sufficient lubricity. The coatings must also allow the sealing material to adhere. The coatings must avoid contamination or taint of the product, and must also comply with legislation. It is expensive to simultaneously meet all these requirements.

The relatively great total thickness of the coatings can lead to the creation of particles or hairs of coatings during cutting of the blanks (blanking) and drawing. A well-known solution to avoid such hairs or particles is to only apply the coatings to the regions of the sheet which will form the blanks, whilst cutting the blanks as close to the edge of the coated regions as possible, but without cutting the coated region. However, it is difficult to maintain the edge of the coated region both close to and concentric with the cut-edge and any unevenness of the coating at the edge of the coated region can upset the drawing operation, causing off-centre drawing and wrinkles. Contact between un-coated bare metal adjacent to the edge of the blank and the clamping surfaces of the drawing tooling can also cause dirt to contaminate the closure.

US3,633,781 describes a closure cap for bottles and being provided with plural coating layers over its interior surface. One of these layers can be removed by peeling to reveal printed text.

From US 3 633 781 A there is known a metal closure comprising a panel and a depending side wall terminating in a cut edge, the inner surface of the closure having a plurality of coating layers applied such that at least a first of the coating layers extends over the entire surface of the closure and at least a second of the coating layers is provided over the panel and the first coating layer.

From US 3 633 781 A there is also known a method of manufacturing a metal closure comprising a panel and a depending side wall terminating in a cut edge, the method comprising: applying a plurality of coating layers to a metal sheet such that at least a first of the coating layers extends over the entire surface of a region to be cut out, and at least a second of the coating layers is provided over a region of the area to be cut out; cutting the sheet at said edge to provide a blank; and forming the blank into a closure including drawing the blank to provide a panel and a depending side wall terminating in the cut edge and such that the coating layers are present on an inner surface of the closure.

### Summary

It is an objective of the present invention to provide a closure with a reduced risk of particles or hairs being formed at the cut edge. This may be achieved by having a reduced number or thickness of coating layers at the cut edge. Limiting one or more of the coating layers in such a way saves cost and helps avoid creation of coating particles and hairs by reducing the total coating thickness at the cut edge. Embodiments of the invention also enable the coating materials applied to the panel region to be optimised to prevent undesirable chemical reactions such as corrosion between the metal and the contents of the container, to avoid contamination or taint of the product, and to comply with food-contact legislation, without the need to withstand the drawing process. They also enable the coating materials applied to the skirt region to be optimised to withstand the drawing process and any curling, threading or lugging processes, and to adhere well adjacent to the cut-edge, without the need to meet all the requirements of the panel region. The sequence of application of each layer may be selected to best suit adhesion of the sealing material to the outer panel region. According to an aspect of the invention, there is provided a metal closure comprising a panel and a depending side wall terminating in a cut edge, the inner surface of the closure having a plurality of polyester-based coating layers applied such that at least a first of the coating layers extends over the entire surface of the closure and at least a second of the coating layers is provided over the panel and the first coating layer and does not extend to the cut edge, wherein the total coating thickness at and in proximity to the cut edge is less than the coating thickness on the panel.

According to a further aspect, there is provided a method of manufacturing a metal closure comprising a panel and a depending side wall terminating in a cut edge. A plurality of polyester-based coating layers are applied to a metal sheet such that at least a first of the coating layers extends over the entire surface of a region to be cut out including up to an edge to be cut, and at least a second of the coating layers is provided over a region of the area to be cut out that will form the panel but does not extend to the edge to be cut. The coating thickness at and in proximity to the edge to be cut is less than the thickness on the region to form the panel. The sheet is cut at said edge to provide a blank, and the blank is formed into a closure including drawing the blank to provide a panel and a depending side wall terminating in the cut edge and such that the coating layers are present on an inner surface of the closure.

### Brief Description of the Drawings

Figure 1A is a perspective external view of a circular drawn closure shell;
Figure 1B is an illustrative cross section of a circular drawn closure shell perpendicular to the axis;
Figure 1C is an illustrative axial view of a circular blank from which the closure shell is drawn;
Figure 2 is a flowchart of a method of manufacturing a closure.

### Detailed Description

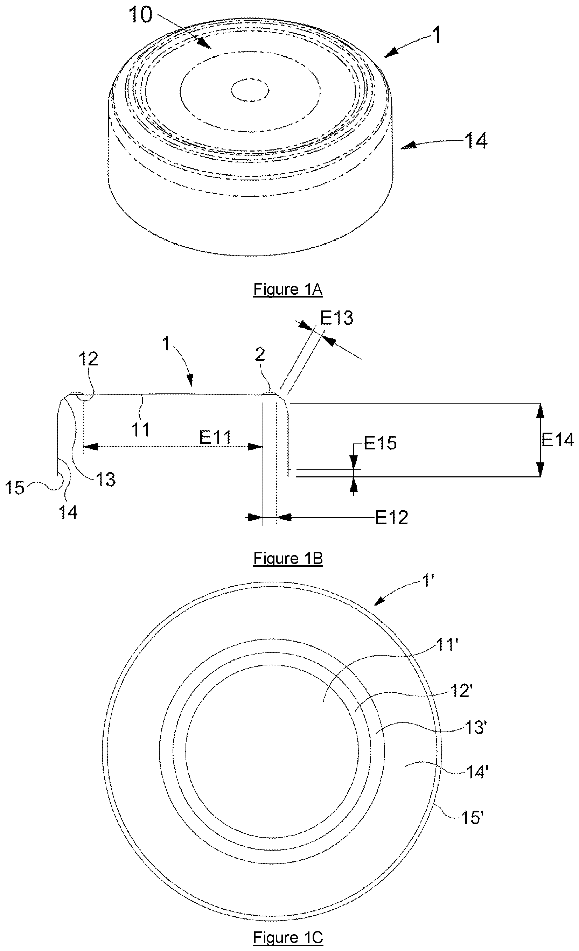

Figure 1A shows an exemplary closure 1 after the completion of the blanking and drawing steps. The closure has a circular top panel 10, and a side wall 14 depending from the periphery of the top panel. The top panel is substantially flat, but may contain raised or recessed features such as tamper-evident buttons or embossed decoration. Such a closure, possibly after completion of further steps to add lugs and/or threading to the side wall, provide a curl to the cut edge, etc, may be suitable for closing a container such as a jar or bottle.

Figure 1B is a cross section of the closure along its diameter, showing a sealing compound 2 which adheres to the underside of a raised ridge in the top panel, close to the periphery. The sealing compound is used to ensure a good seal with the container when the closure is in use, and is positioned to press against the rim of the container when the container is closed by the closure.

For the purposes of the below description, several regions of the closure will now be defined with reference to Figure 1B:
- A central panel region 11
- An outer panel region 12 surrounding the inner panel region 11. The sealing compound is adhered to the underside of this outer panel region.
- An intermediate panel region 13 between the outer panel region 12 and the side wall 14.
- A cut edge region 15 at the base of the sidewall.

The extent of each region (and of the side wall 14) is shown by dimensions indicated by corresponding numerals E11 to E15.

Closures of the type shown in Figures 1A and 1B are normally produced from a single sheet of coated and decorated sheet metal, which is cut into circular blanks ("blanked") and drawn to form the shape shown in Figures 1A and 1B.

Figure 1C is a plan view of a blank 1' used to form the closure 1. Reference numerals 11' to 15' indicate regions of the blank which correspond to the regions indicated by reference numerals 11 to 15 in Figure 1B when the blank is formed into a closure. As can be seen from Figure 1C, the side wall is formed from an annular region of the blank extending outwardly from the intermediate region to the cut edge.

In a conventional closure, a plurality of coating layers are applied to the sheet metal in sequence, before the blank is cut. For the purposes of this disclosure, the sealing compound (which is only applied to the outer panel region) is not considered one of the coating layers. Generally, the coating layers will include one or more base coats and a top coat, which are selected to give desirable properties to the closure.

As described above, cutting blanks and drawing them into closures can form hairs and particles - in part due to the thickness of the coating layers. In order to mitigate this, an alternative construction for such closures is proposed here, in which a reduced thickness of coating layers is applied to the cut edge region compared to those applied in the central region. This may be achieved by using thinner layers in the cut edge region, or by using fewer layers in that region.

The principle of applying different coating layers to different regions of the closure blank can also be used to give layers with differing properties to the central panel region and the side wall region, as required.

For example, the central panel region may have layers which provide improved corrosion resistance, avoid contamination or tainting of the product, and comply with all relevant food-contact legislation. Preferred materials generally have greater crosslinking, improved barrier properties, and do not contain compounds such as Bisphenol A or other undesirable materials.

The side wall region may have layers which have a better ability to withstand the blanking and drawing processes, and any curling, threading or lugging processes, and resist corrosion caused by the processing of the containers. As the materials in this region will not normally be in contact with the food, they may contain materials which would be prohibited in the central region. Preferred materials would be flexible, well lubricated, and have a reduced tendency to forming particles or hairs.

One or more of the coating layers used in the side wall region may be omitted in the cut edge region, to further reduce the creation of particles or hairs when the blank is cut. However, there should be at least one layer present in the cut edge region which prevents corrosion of the closure.

The layers in the central panel region may extend at least partially into the outer panel region, to avoid any gaps in the coating which could cause food to contact the metal of the container. Similarly, the coating layers in the side wall region may extend slightly into the intermediate region or outer panel region to increase the tolerance to slight misalignments of the tooling during blanking and drawing. The overlapping and ordering of layers may be arranged to suit the materials being used.

Some sealing materials contain components such as plasticisers which weaken the coatings underneath. This means that the areas closest to the sealing material are often the most prone to corrosion. In order to combat this, one or more of the layers of the side wall region may extend to slightly within the central panel region in order to provide a further barrier between the sealing material and the top coat of the central panel region. Alternatively or additionally, a layer of special top coat may be applied to the outer panel region and slightly to either side in order to provide a good surface for the sealing material to adhere to and protect the other coatings from the effects of plasticisers.

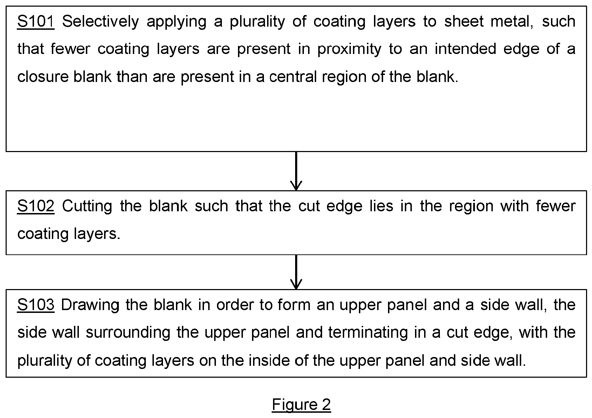

The closure is manufactured from a sheet of metal. Figure 2 is a flowchart of this process. In order to form the closure, the coatings are selectively applied to regions of the sheet metal S101, i.e. applying the coatings which are required on the central panel region to the region of the sheet metal which will be formed into the central panel region of the closure, applying the coatings which are required on the side wall to the region of the sheet metal which will be formed into the side wall of the closure, etc. The coatings are applied such that the coating layer thickness in proximity to an intended edge of a closure blank is less than the thickness at one or more other regions of the closure blank, e.g. by applying thinner layers and/or fewer layers in the cut edge region. Where a coating is present on multiple adjacent regions, it may be applied as a single layer to all of the required regions. The selective application may be accomplished by the use of cut-away rollers, with each roller being configured to transfer a coating to the required area for that coating. Coatings which are to be applied to the whole closure may be applied to the entirety of the sheet metal, or only to the regions which will form the blanks. Coatings which are present in the cut edge region may also be applied slightly beyond the border of the blanks, to allow for slight misalignments of the tooling.

Once the sheet metal is coated, it is cut into blanks S102 (such as the blank depicted in Figure 1C), with the blanks being cut concentric to the regions to which the coatings are applied and the cut edge lying in the region with fewer coating layers. The sealing compound may be applied to the outer panel region before or after blanking and/or drawing. The blanks are then drawn S103 in order to form the closure by forming the side wall region into a side wall, with the coating layers on the inside of the closure, and adding other features as required. Additional steps such as lugging or threading of the closure may then be performed. The step of applying the sealing material may be carried out at any stage, and whilst sealing material is most commonly applied to closures after drawing the blank, the closure of the invention is additionally suited to the application of sealing material prior to blanking or drawing.

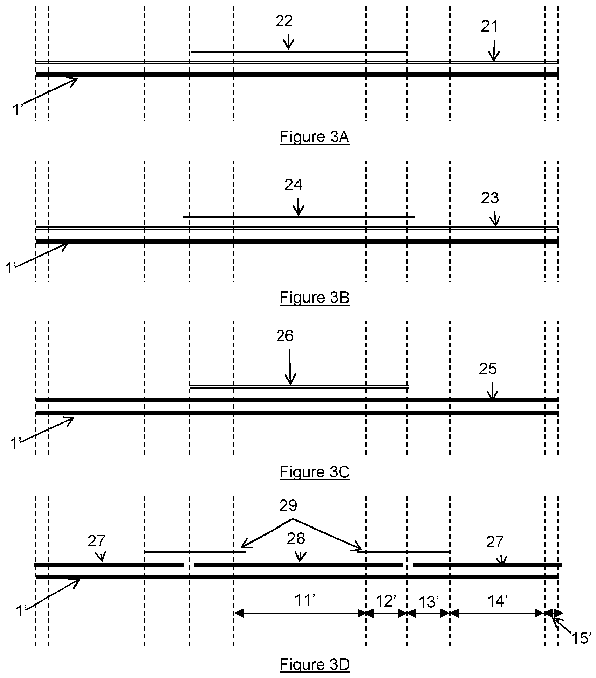

A selection of exemplary embodiments will now be presented with reference to Figures 3A to 3D. The particular materials and combinations disclosed in these embodiments are not intended to be limiting, and it should be appreciated that other combinations of layers are within the scope of the present disclosure. Any coatings shown as applied at the cut edge region 15' in the Figures is applied at least a short distance beyond the cut edge, and may be applied to all regions of the metal sheet which are not part of a blank. Figures 3A to 3D each show a cross section of a closure blank, with the coating layers presented in exploded view. The vertical dotted lines indicate the regions 11' to 15' of the closure blank 1'.

In one embodiment, as shown in Figure 3A, one or two coats of an epoxy-based coating 21 are first applied to the entire sheet, and then a polyester based coating containing a dispersion of PVC 22 is applied to the sheet in circles corresponding to the central and outer panel regions, with a slight overlap into the intermediate regions. The PVC dispersion coating (commonly known as "organosol") allows the PVC based sealing material to adhere better to the outer panel region. As an alternative, an acrylic based coating containing a dispersion of PVC may be used in place of the polyester based coating.

In a further embodiment, as shown in Figure 3B, one or two coats of a polyester based coating 23 are first applied to the entire sheet, and then a polyester based coating containing a dispersion of PVC 24 is applied to the sheet in circles corresponding to the central and outer panel regions, with a slight overlap into the intermediate regions. The use of a polyester based coating in place of the epoxy based coating of the above embodiment avoids the presence of Bisphenol A.

In a yet further embodiment, as shown in Figure 3C, one or two coats of a polyester based coating 25 are applied to the entire sheet, and a further one or two coats are 26 applied to the central panel and outer panel regions only. The coats which are applied to the entire sheet may be formulated to provide greater flexibility and lubricity, and the coats which are applied to the central panel and outer panel regions may be formulated to provide greater corrosion resistance. These coats may be applied in any sequence. This embodiment is suited to the adhesion of a polyester-based elastomeric sealing material.

In a further embodiment, as shown in Figure 3D, one or two coats of an epoxy based coating 27 are applied to the entire sheet except for the central panel and outer panel regions, one or two coats of a polyester based coating 28 are applied to the central panel and outer panel regions, and a further coat of a polyester based coating 29 formulated to resist the effects of plasticisers is applied to the intermediate and outer panel regions, and a short way into the central panel region. In Figure 3D, the gap between the coatings at the border of the outer panel region has been exaggerated for clarity. In practice, the coatings may overlap slightly to ensure complete coverage. Although the invention has been described in terms of preferred embodiments as set forth above, it should be understood that these embodiments are illustrative only and that the claims are not limited to those embodiments. It will be appreciated by the person of skill in the art that various modifications may be made to the above described embodiments without departing from the scope of the present invention, as defined by the claims.

## Claims

1. A metal closure comprising a panel (11) and a depending side wall (14) terminating in a cut edge (15), the inner surface of the closure having a plurality of polyester-based coating layers applied such that at least a first of the coating layers (23) extends over the entire surface of the closure and at least a second of the coating layers (24) is provided over the panel (11) and the first coating layer (23) and does not extend to the cut edge (15), wherein the total coating thickness at and in proximity to the cut edge is less than the coating thickness on the panel (11).

2. A closure according to claim 1, wherein said second coating layer (24) is not applied to the side wall (14).

3. A closure according to claim 1 or 2, wherein the coating layers (23, 24) applied to the panel (11) provide corrosion resistance and do not contain compounds which would contaminate or taint a product which the closure is intended to be used with.

4. A closure according to any preceding claim, wherein the layer or layers (23) applied to the side wall (14) withstand a drawing, curling, threading, and/or lugging process.

5. A closure according to any preceding claim and comprising a sealing compound (2) applied to an annular region (12) of the underside of the panel, on top of the coating layers (23,24), in order to provide an improved seal with a container to which the closure is configured to be applied.

6. A closure according to any one of the preceding claims and comprising lugs or a screw thread on an inner surface of the side wall (14) to permit attachment of the closure to a food or beverage container.

7. A method of manufacturing a metal closure comprising a panel and a depending side wall terminating in a cut edge, the method comprising:
applying (S101) a plurality of polyester-based coating layers to a metal sheet such that at least a first of the coating layers extends over the entire surface of a region to be cut out including up to an edge to be cut, and at least a second of the coating layers is provided over a region of the area to be cut out that will form the panel but does not extend to the edge to be cut, wherein the coating thickness at and in proximity to the edge to be cut is less than the thickness on the region to form the panel;
cutting (S102) the sheet at said edge to provide a blank; and
forming (S103) the blank into a closure including drawing the blank to provide a panel and a depending side wall terminating in the cut edge and such that the coating layers are present on an inner surface of the closure.

8. A method according to claim 7, and comprising applying the coating layers using cut-away rollers, each cut-away roller being configured to apply one or more layers to specific regions of the metal sheet.

9. A method according to claim 7 or 8 and comprising, after forming the blank into a closure, applying a sealing compound to an annular region inwardly of the cut edge.

10. A method according to any one of claims 7 to 9, wherein said step of applying the coating layers comprises applying said second coating layer only to a region of the sheet which is formed into the panel, but not to a region which is formed into the side wall.

11. A method according to any one of claims 7 to 10 and comprising forming lugs or a screw thread on an inner surface of the side wall to permit attachment of the closure to a food or beverage container.

12. A method according to any one of claims 7 to 11 and comprising forming a curl at said cut edge.

## Patentansprüche

1. Metallverschluss, umfassend eine Platte (11) und eine herabhängende Seitenwand (14), die in einer Schnittkante (15) endet, wobei die innere Oberfläche des Verschlusses eine Vielzahl von Beschichtungsschichten auf Polyesterbasis aufweist, die so aufgebracht sind, dass sich mindestens eine erste der Beschichtungsschichten (23) über die gesamte Oberfläche des Verschlusses erstreckt und mindestens eine zweite der Beschichtungsschichten (24) über der Platte (11) und der ersten Beschichtungsschicht (23) vorgesehen ist und sich nicht bis zur Schnittkante (15) erstreckt, wobei die gesamte Dicke der Beschichtung an und in der Nähe der Schnittkante geringer ist als die Dicke der Beschichtung auf der Platte (11).

2. Verschluss nach Anspruch 1, wobei die zweite Beschichtungsschicht (24) nicht auf die Seitenwand (14) aufgebracht ist.

3. Verschluss nach Anspruch 1 oder 2, wobei die Beschichtungsschichten (23, 24), die auf der Platte (11) aufgebracht sind, Korrosionsbeständigkeit bereitstellen und keine Verbindungen enthalten, die ein Produkt, mit dem der Verschluss verwendet werden soll, verunreinigen oder beeinträchtigen würden.

4. Verschluss nach einem der vorhergehenden Ansprüche, wobei die Schicht oder Schichten (23), die auf der Seitenwand (14) aufgebracht sind, einem Zieh-, Kräuselungs-, Schraub- und/oder Ansetzvorgang standhalten

5. Verschluss nach einem der vorhergehenden Ansprüche und umfassend eine Dichtungsmasse (2), die auf einer ringförmigen Region (12) der Unterseite der Platte auf der Oberseite der Beschichtungsschichten (23,24) aufgebracht ist, um eine verbesserte Abdichtung mit einem Behälter bereitzustellen, an dem der Verschluss konfiguriert ist, aufgebracht zu werden.

6. Verschluss nach einem der vorhergehenden Ansprüche und umfassend Ansätze oder ein Schraubgewinde auf einer inneren Oberfläche der Seitenwand (14), um eine Anbringung des Verschlusses an einen Nahrungsmittel- oder Getränke-Behälter zu gestatten.

7. Verfahren zum Herstellen eines Metallverschlusses, umfassend eine Platte und eine herunterhängende Seitenwand, die in einer Schnittkante endet, das Verfahren umfassend:
Aufbringen (S101) einer Vielzahl von Beschichtungsschichten auf Polyesterbasis auf ein Metallblech derart, dass sich mindestens eine erste der Beschichtungsschichten über die gesamte Oberfläche einer auszuschneidenden Region einschließlich bis zu einer zu schneidenden Kante erstreckt und mindestens eine zweite der Beschichtungsschichten über eine Region der auszuschneidenden Fläche vorgesehen ist, die die Platte bilden wird aber die sich nicht bis zu der zu schneidenden Kante erstreckt, wobei die Dicke der Beschichtung an und in der Nähe der zu schneidenden Kante geringer ist als die Dicke auf der Region, die die Platte bilden wird;
Schneiden (S102) des Blechs an der Kante, um einen Rohling bereitzustellen; und
Formen (S103) des Rohlings zu einem Verschluss, einschließlich Ziehen des Rohlings, um eine Platte und eine herunterhängende Seitenwand bereitzustellen, die in der Schnittkante endet, und derart, dass die Beschichtungsschichten auf einer inneren Oberfläche des Verschlusses vorhanden sind.

8. Verfahren nach Anspruch 7 und umfassend Aufbringen der Beschichtungsschichten unter Verwendung von Trennwalzen, wobei jede Trennwalze konfiguriert ist, eine oder mehrere Schichten auf spezifische Regionen des Metallblechs aufzubringen.

9. Verfahren nach Anspruch 7 oder 8 und umfassend, nach Formen des Rohlings zu einem Verschluss, Aufbringen einer Dichtungsmasse auf eine ringförmige Region im Inneren der Schnittkante.

10. Verfahren nach einem der Ansprüche 7 bis 9, wobei der Schritt des Aufbringens der Beschichtungsschichten umfasst, die zweite Beschichtungsschicht nur auf eine Region des Blechs, die zu der Platte geformt wird, aber nicht auf eine Region, die zu der Seitenwand geformt wird, aufzubringen.

11. Verfahren nach einem der Ansprüche 7 bis 10 und umfassend, Ansätze oder ein Schraubgewinde an einer inneren Oberfläche der Seitenwand zu bilden, um Anbringen des Verschlusses an einen Nahrungsmittel- oder Getränke-Behälter zu gestatten.

12. Verfahren nach einem der Ansprüche 7 bis 11 und umfassend, eine Kräuselung an der Schnittkante zu bilden.

## Revendications

1. Fermeture métallique comprenant un panneau (11) et une paroi latérale dépendante (14) se terminant en un bord de coupe (15), la surface intérieure de la fermeture présentant une pluralité de couches de revêtement à base de polyester, appliquées de sorte qu'au moins une première des couches de revêtement (23) s'étend sur toute la surface de la fermeture et au moins une deuxième des couches de revêtement (24) est ménagée sur le panneau (11) et la première couche de revêtement (23) et ne s'étend pas jusqu'au bord de coupe (15), dans laquelle l'épaisseur totale du revêtement au niveau et à proximité du bord de coupe est inférieure à l'épaisseur de revêtement sur le panneau (11).

2. Fermeture selon la revendication 1, dans lequel ladite deuxième couche de revêtement (24) n'est pas appliquée à la paroi latérale (14).

3. Fermeture selon la revendication 1 ou 2, dans lequel les couches de revêtement (23, 24) appliquées au panneau (11) fournissent une résistance à la corrosion et ne contiennent pas de composés qui contamineraient ou souilleraient un produit avec lequel la fermeture est destinée à être utilisée.

4. Fermeture selon l'une quelconque des revendications précédentes, dans laquelle la couche ou les couches (23) appliquées à la paroi latérale (14) résistent à un processus d'étirage, de courbure, de filetage et/ou de charge.

5. Fermeture selon l'une quelconque des revendications précédentes, et comprenant un composé d'étanchéité (2) appliqué à une région annulaire (12) du côté inférieur du panneau, sur le haut des couches de revêtement (23, 24) afin de fournir un joint amélioré avec un récipient auquel la fermeture est configurée pour être appliquée.

6. Fermeture selon l'une quelconque des revendications précédentes, et comprenant des montants ou un filetage de vis sur une surface interne de la paroi latérale (14) afin de permettre une fixation de la fermeture à un récipient alimentaire ou de boisson.

7. Procédé de fabrication d'une fermeture métallique comprenant un panneau et une paroi latérale dépendante se terminant en un bord de coupe, le procédé comprenant :
l'application (S101) d'une pluralité de couches de revêtement à base de polyester à une feuille métallique de sorte qu'au moins une première des couches de revêtement s'étend sur toute la surface d'une région à découper, y compris jusqu'à un bord à découper et au moins une deuxième des couches de revêtement est ménagée sur une région de la zone à découper qui formera le panneau mais ne s'étend pas jusqu'au bord à découper, dans lequel l'épaisseur de revêtement au niveau et à proximité du bord à découper est inférieure à l'épaisseur sur la région destinée à former le panneau :
la découpe (S 102) de la feuille audit bord pour fournir une ébauche ; et
la formation (S103) de l'ébauche en une fermeture incluant l'étirage de l'ébauche pour fournir un panneau et une paroi latérale dépendante se terminant dans le bord de coupe et de sorte que les couches de revêtement soient présentes sur une surface interne de la fermeture.

8. Procédé selon la revendication 7, et comprenant l'application des couches de revêtement en utilisant des galets de découpe, chaque galet de découpe étant configuré pour appliquer une ou plusieurs couches à des régions spécifiques de la feuille métallique.

9. Procédé selon la revendication 7 ou 8 et comprenant, après la formation de l'ébauche en une fermeture, l'application d'un composé d'étanchéité à une région annulaire vers l'intérieur du bord de coupe.

10. Procédé selon l'une quelconque des revendications 7 à 9, dans lequel ladite étape d'application des couches de revêtement comprend l'application de ladite deuxième couche de revêtement uniquement à une région de la feuille qui forme le panneau, mais pas à une région qui forme la paroi latérale.

11. Procédé selon l'une quelconque des revendications 7 à 10 et comprenant la formation de montants ou d'un filetage de vis sur une surface interne de la paroi latérale afin de permettre la fixation de la fermeture à un récipient alimentaire ou de boisson.

12. Procédé selon l'une quelconque des revendications 7 à 11, et comprenant la formation d'une boucle au niveau dudit bord de coupe.
